# EUROPÄISCHE PATENTSCHRIFT

(11) **EP 3 576 903 B1**
(45) Veröffentlichungstag und Bekanntmachung des Hinweises auf die Patenterteilung: **27.05.2020**
(21) Anmeldenummer: 17715056.2
(22) Anmeldetag: 14.03.2017
(51) Int. Cl.: B23P 19/08, B65B 13/02, B65B 13/18, F16L 33/025, B65B 13/30

(54) **VORRICHTUNG ZUR KRAFTÜBERWACHUNG BEIM FIXIEREN EINER SPANNSCHELLE**
DEVICE FOR MONITORING FORCE WHEN FIXING A FASTENING CLAMP
DISPOSITIF DE CONTRÔLE DE FORCE LORS DE LA FIXATION D'UN COLLIER DE SERRAGE

(43) Veröffentlichungstag der Anmeldung: 11.12.2019
(73) Patentinhaber: Oetiker Schweiz AG, 8810 Horgen (CH)
(72) Erfinder: STEINER, Peter, 8849 Alpthal (CH)
(74) Vertreter: Strehl Schübel-Hopf & Partner
(86) Internationale Anmeldenummer: PCT/EP2017/056012
(87) Internationale Veröffentlichungsnummer: WO 2018/166585

(56) Entgegenhaltungen:
- WO-A1-2016/096983
- US-A1- 2009 114 308
- US-A1- 2014 007 395

## Beschreibung

### Stand der Technik

In WO 2016/096983 A1 ist ein Werkzeug zum Fixieren einer Spannschelle beschrieben, das ein Paar vom um parallele Achsen schwenkbaren Hebeln aufweist, die an ihren Enden gegeneinander bewegbare, auf die Schelle einwirkende Zangenbacken tragen. Die Zangenbacken werden dort über eine Steuerkulisse so betätigt, dass sie in Fenster einer Schließe der Spannschelle eingreifen und die Schließe unter Verformung mit dem Klemmband verriegeln. Für eine sichere Fixierung werden verhältnismäßig große Kräfte aufgebracht.

Es hat sich gezeigt, dass einwandfreie und reproduzierbare Ergebnisse beim Fixieren von Spannschellen erzielt werden können, wenn ein vorgegebener Kraft/Zeit- oder Kraft/Weg-Verlauf der auf die Zangenbacken ausgeübten Kräfte eingehalten wird.

### Abriss der Erfindung

Ziel der Erfindung ist eine Vorrichtung, die es gestattet, bei einem Werkzeug der genannten Art den Kraftverlauf beim Fixieren einer Spannschelle zu überwachen und dadurch Verbindungen zwischen Klemmband und Schließe ungenügender Qualität zu detektieren.

Dieses Ziel ist mit einer Vorrichtung zur Kraftüberwachung in einem Werkzeug zum Fixieren einer Spannschelle zu erreichen, wobei das Werkzeug ein Paar von um parallele Achsen schwenkbaren Hebeln aufweist, die an ihren Enden gegeneinander bewegbare, auf die Schelle einwirkende Zangenbacken tragen, und wobei die Vorrichtung ein bezüglich des Werkzeugs festes Gehäuse und ein Paar von Kraftübertragungsschenkeln aufweist, deren jeder an einem Ende elastisch an dem Gehäuse angelenkt ist, am anderen Ende eine Anlagefläche für einen an dem Gehäuse angebrachten Kraftsensor aufweist und zwischen seinen Enden eine Bohrung hat, in der die Achse des betreffenden Werkzeughebels gelagert ist.

Aus den Signalen der Kraftsensoren gewonnene Kraft/Zeit- oder Kraft/ Weg-Kurven erlauben die Erkennung von Spannschellen, bei den die Fixierung zwischen Klemmband und Schließe nicht einer gewünschten Qualität entspricht. In einem solchen Fall kann beispielsweise eine Zangenbacke ausgetauscht werden, um die Qualität auf das gewünschte Niveau zu bringen.

### Zeichnungen

Ein Ausführungsbeispiel der Erfindung wird nachstehend anhand der Zeichnungen näher erläutert. Darin zeigen:
Fig. 1 eine isometrische Darstellung einer Vorrichtung zur Überwachung der beim Fixieren einer Spannschelle auftretenden Kräfte, und
Fig. 2 und 3 Teile der Vorrichtung nach Fig. 1.

### Ausführungsbeispiel

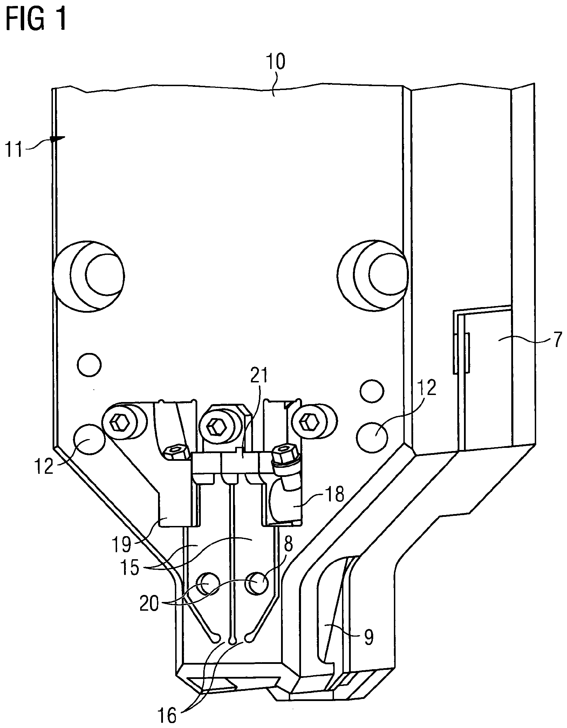

Die in den Zeichnungen dargestellte Vorrichtung weist ein im Wesentlichen aus einer Platte **10** bestehendes Gehäuse **11** auf, das sich an einem in Fig. 1 nur angedeuteten Werkzeug **7** zum Fixieren einer Spannklemme anbringen lässt. Ein solches Werkzeug umfasst ein Paar von um parallele Achsen schwenkbaren Hebeln auf, die an ihren Enden gegeneinander bewegbare, auf die Schelle einwirkende Zangenbacken tragen. In Fig. 1 sind die Achsen bei **8** und die Zangenbacken bei **9** angedeutet.

Handelt es sich um ein Werkzeug, wie es in WO 2016/096983 A1, dort insbesondere Fig. 9, beschrieben ist, so wird das Gehäuse **11** vor dem Kopf dieses Werkzeugs **7** angeordnet und über Bohrungen **12** durchsetzende (nicht gezeigte) Bolzen daran befestigt.

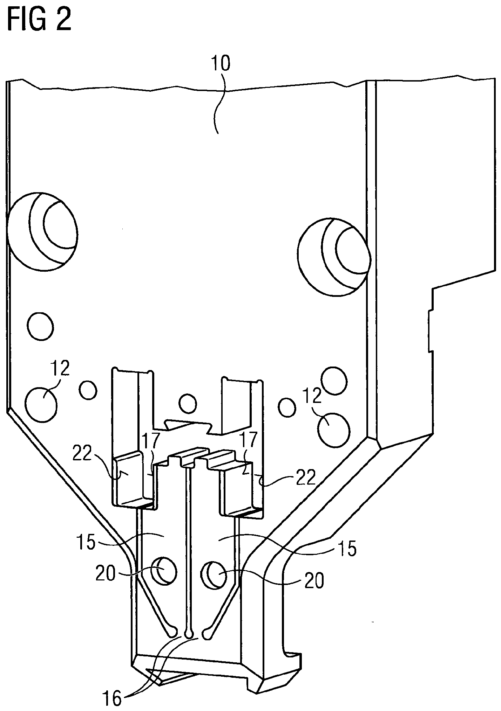

In dem Gehäuse **11** sind zwei Kraftübertragungsschenkel **15** ausgebildet, die aus der Platte **10** freigeschnitten sind und nur an ihren in Fig. 1 unteren Enden jeweils über ein auf diese Weise gebildetes elastisches Gelenk **16** mit der Platte **10** zusammenhängen. Jeder Kraftübertragungsschenkel **15** weist an seinem oberen Ende eine Anlagefläche **17** (siehe Fig. 2) für einen Kraftsensor **18** auf. Jeder Kraftsensor **18** ist über einen Sensorhalter **19** an der Platte **10** befestigt und gegen die betreffende Anlagefläche **17** vorgespannt. Zwischen dem unteren und dem oberen Ende hat jeder Kraftübertragungsschenkel **15** eine Bohrung **20,** in der die Achse **8** der jeweiligen Zangenbacke **9** des Werkzeugs **7** gelagert ist. Die Anlagefläche **17** jedes Kraftübertragungsschenkels **15** steht nach dem Einbau der Kraftsensoren **18** parallel zu einer im Gehäuse **11** ausgebildeten gegenüberliegenden Anlagefläche **22.**

Um das Gehäuse **11** gegen Überlastung im Falle einer Fehlmanipulation zu schützen, wird die Auslenkung der oberen Enden der Kraftübertragungsschenkel **15** von einem sie übergreifenden Bügel **21** begrenzt.

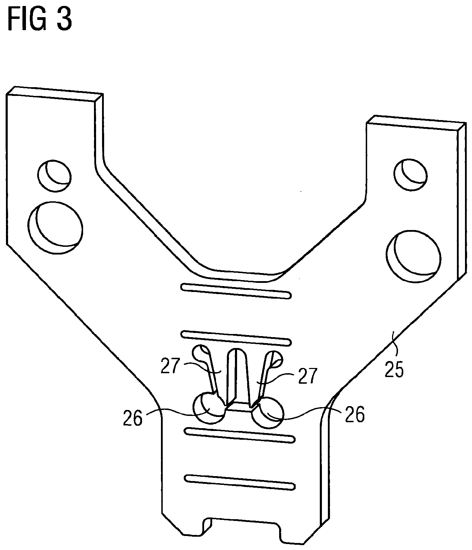

Zwischen der Platte **10** und dem Werkzeug ist eine Distanzplatte **25** (Fig. 3) eingefügt, die zwei von den Achsen **8** durchsetzte Bohrungen **26** aufweist. Aus der Distanzplatte **25** sind zwei Federschenkel **27** freigeschnitten, deren freie untere Enden im Bereich der Bohrungen **26** an den Achsen **8** anliegen.

Beim Betrieb des Werkzeugs werden die auf den Achsen **8** gelagerten Zangenbacken **9** gegeneinander bewegt, um die Schließe und das Klemmband der Spannschelle miteinander zu verriegeln. Dabei werden die Achsen **8** auseinander gedrückt. Diese Kraft überträgt sich auf die Kraftübertragungsschenkel **15,** die ihrerseits die Kraftsensoren **18** beaufschlagen.

Weicht eine aus den Sensorsignalen ermittelte Kraft/Zeit- oder Kraft/Weg-Kurve um ein bestimmtes Maß von einem vorgegebenen Verlauf ab, so entspricht die von dem Werkzeug **7** ausgeführte Verbindung zwischen Schließe und Klemmband der Spannschelle nicht der gewünschten Qualität und kann als fehlerhaft bewertet werden.

Die beschriebene parallele Ausrichtung der Anlageflächen **17** für die Kraftsensoren **18** ist für reproduzierbare präzise Messungen bedeutsam

Der Erhöhung der Messgenauigkeit dienen auch die Federschenkel **27,** die Spiel zwischen der Distanzplatte **25** und den Achsen **8** zu vermeiden suchen.

### Bezugszeichen

**7** Werkzeug
**8** Achse
**9** Zangenbacken
**10** Platte
**11** Gehäuse
**12** Bohrung
**15** Kraftübertragungsschenkel
**16** Gelenk
**17** Anlagefläche
**18** Kraftsensor
**19** Sensorhalter
**20** Bohrung
**21** Bügel
**22** Anlagefläche
**25** Distanzplatte
**26** Bohrung
**27** Federschenkel

## Patentansprüche

1. Vorrichtung zur Kraftüberwachung in einem Werkzeug zum Fixieren einer Spannschelle, wobei das Werkzeug ein Paar vom um parallele Achsen (**8**) schwenkbaren Hebeln aufweist, die an ihren Enden gegeneinander bewegbare, auf die Schelle einwirkende Zangenbacken (**9**) tragen,
**gekennzeichnet durch** ein Paar von Kraftübertragungsschenkeln (**15**), deren jeder an einem Ende elastisch an einem bezüglich des Werkzeugs festen Gehäuse (**11**) angelenkt ist, am anderen Ende eine Anlagefläche (**17**) für einen mit dem Gehäuse verbundenen Kraftsensor (**18**) aufweist und zwischen seinen Enden eine Bohrung (**20**) hat, in der die Achse (8) des betreffenden Werkzeughebels gelagert ist.

2. Vorrichtung nach Anspruch 1, wobei die Kraftsensoren (**18**) gegenüber ihren Anlageflächen (**17**) vorgespannt sind.

3. Vorrichtung nach Anspruch 1 oder 2, wobei die Anlagefläche (**17**) jedes Kraftübertragungsschenkels (**15**) parallel zu einer in dem Gehäuse (**11**) ausgebildeten.zweiten Anlagefläche (**22**) steht.

4. Vorrichtung nach einem der vorhergehenden Ansprüche mit einer Überlastsicherung (**18**) zur Begrenzung der elastischen Anlenkung der Kraftübertragungsschenkel (**15**).

5. Vorrichtung nach einem der vorhergehenden Ansprüche, wobei die Kraftübertragungsschenkel (**15**) in eine Sollstellung vorgespannt sind.

6. Vorrichtung nach Anspruch 5 mit einer zwischen dem Gehäuse (**11**) und dem Werkzeug anzuordnenden Distanzplatte (**25**) mit zwei von den Achsen (**8**) durchsetzten Bohrungen (**26**) und mit Federschenkeln (**27**) zur Anlage an den Achsen (**8**) im Bereich der Bohrungen (**26**).

## Claims

1. A device for force monitoring in a tool for fixing a tension clamp, the tool having a pair of levers pivotable about parallel axes (**8**) carrying at their ends plier jaws (**9**) that can be moved toward each other and act on the clamp,
**characterized by** a pair of power transmission arms (**15**), each of which is elastically articulated at one end to a housing (**11**) that is fixed relative to the tool, has at the other end a contact surface (**17**) for a force sensor (**18**) connected to the housing and has, between its ends, a bore (**20**) in which the axis (**8**) of the relevant tool lever is supported.

2. The device according to claim 1, wherein the force sensors (**18**) are biased against their contact surfaces (**17**).

3. The device according to claim 1 or 2, wherein the contact surface (**17**) of each power transmission arm (**15**) is parallel to a second contact surface (**22**) which is formed in the housing (**11**).

4. The device according to any preceding claim, comprising an overload protection (**18**) for limiting the elastic articulation of the power transmission arms (**15**).

5. The device according to any preceding claim, wherein the power transmission arms (**15**) are biased into a set position.

6. The device according to claim 5, comprising a spacer plate (**25**) arranged between the housing (**11**) and the tool, wherein the spacer plate has two bores (**26**) penetrated by the axes (**8**) and spring legs (**27**) for engagement with the axes (**8**) in the region of the bores (**26**).

## Revendications

1. Dispositif de contrôle de force dans un outil pour la fixation d'un collier de serrage, dans lequel l'outil présente une paire de leviers pouvant pivoter sur des axes (8) parallèles, qui portent sur leurs extrémités des mâchoires de pinces (9) mobiles l'une par rapport à l'autre, agissant sur le collier,
**caractérisé par** une paire de branches de transmission de force (15) dont chacune est articulée de manière élastique par une extrémité contre un boîtier (11) fixe par rapport à l'outil, présente à l'autre extrémité une face d'appui (17) pour un capteur de force (18) relié au boîtier et a un perçage (20) entre ses extrémités, dans lequel est disposé l'axe (8) du levier d'outil concerné.

2. Dispositif selon la revendication 1, dans lequel les capteurs de force (18) sont précontraints par rapport à leurs surfaces d'appui (17).

3. Dispositif selon la revendication 1 ou 2, dans lequel la face d'appui (17) de chaque branche de transmission de force (15) est parallèle à une deuxième face d'appui (22) formée dans le boîtier (11).

4. Dispositif selon l'une des revendications précédentes comprenant une sécurité de surcharge (18) pour limiter l'articulation élastique des branches de transmission de force (15).

5. Dispositif selon l'une des revendications précédentes, dans lequel les branches de transmission de force (15) sont précontraintes dans une position de consigne.

6. Dispositif selon la revendication 5 comprenant une plaque d'écartement (25) disposée entre le boîtier (11) et l'outil comprenant deux perçages (26) traversés par les axes (8) et comprenant des branches de ressort (27) pour l'appui contre les axes (8) au niveau des perçages (26).
